(19) Europäisches Patentamt
European Patent Office
Office européen des brevets

(11) **EP 0 928 134 B1**

(12) **EUROPEAN PATENT SPECIFICATION**

(45) Date of publication and mention
of the grant of the patent:
**27.11.2002 Bulletin 2002/48**

(21) Application number: **96932111.6**

(22) Date of filing: **16.08.1996**

(51) Int Cl.⁷: **A01M 21/04**

(86) International application number:
**PCT/SE96/01068**

(87) International publication number:
**WO 98/007314 (26.02.1998 Gazette 1998/08)**

(54) **METHOD AND DEVICE FOR WEED CONTROL**

VERFAHREN UND VORRICHTUNG ZUR UNKRAUTBEKÄMPFUNG

PROCEDE ET DISPOSITIF DE DESHERBAGE

(84) Designated Contracting States:
**AT BE CH DE DK ES FI FR GB GR IE IT LI LU MC NL PT SE**
Designated Extension States:
**LT LV**

(43) Date of publication of application:
**14.07.1999 Bulletin 1999/28**

(73) Proprietor: **Zero Weed AB**
**220 09 Lund (SE)**

(72) Inventors:
• **PERSSON, Bertil**
**S-223 75 Lund (SE)**
• **HENRIKSSON, Pär**
**S-223 55 Lund (SE)**

• **NYBRANT, Tomas**
**S-243 34 Storvreta (SE)**
• **MATTSSON, Berit**
**S-244 93 Kävlinge (SE)**

(74) Representative: **Berglund, Erik Wilhelm**
**Berglunds Patentbyra AB**
**Aspebraten**
**590 55 Sturefors (SE)**

(56) References cited:
WO-A-84/04656      DE-A- 2 328 705
US-A- 3 559 337      US-A- 4 092 800
US-A- 4 094 095      US-A- 4 338 743

• **DERWENT'S ABSTRACT, No. 94-315222/39, week 9439; & SU,A,1 817 955 (BRYAN AGRIC INST), 30 May 1993.**

**Description**

This invention concerns a method and a device for weed control by means of electricity.

Since many years the use of weed poisons, beside purely mechanical methods, is the dominating method for weed control. There is an increasing concern that an extensive use of weed poisons may harm the nature as well as humans and animals. This concern has led to an increasing interest for alternative non chemical methods as a complement to the traditional mechanical methods.

The concept to kill weed by means of electric energy has been used since the 1890-ies when "Vegetation exterminators" was patented (Sharp, A.A. 1893 (US-A-492 635), Scheible, A. 1895) The technique was developed also for weed control in the agriculture (Buret, W.E. 1928 (US-A-3 661 030), Opp, F.W. ; Collins, W.C. 1935, Opp, F. W. 1952 (US-A-2 588 561), Poynor, R.R. 1954 (US-A-2 682 729). It has further been suggested use in farming, in particular non specific superficial treatment of the soil by moveing electrodes along the ground surface and apply an alternating voltage (Laronze 1982 (FR-A-2 487 168)) or constant high voltage (Krause 1975 (DE-A-2 328705)).

Equipment using electric current for pruning of blueberry bushes and dehydration of the foliage of root crops before harvest has been suggested by (Plueneke, R.H. ;Dykes, W.G. 1975, Plueneke, R.H. ;Dykes, W.G. 1977 (US-A-4 094 095), (US-A-4 257 190)).

Thinning out of drilled plants was suggested in the 1950-ies by (Rainey, E.C. 1952, McCreight, N.L. 1953). Use for soil sterilizing and fertilizing has also been suggested (Keller, C.R. 1947, Opp, F.W.; Collins, W.C. 1935). Wayland et al (1975) (US-A-4 092 800) showed that technically one can use micro waves for sterilizing soil before sowing. Weed and weed seed a few cm into the ground can be killed with microwaves with a frequency of 2450 MHz and the power 60 kW. The machine that they used was a 150 kW diesel driven generator that fed a microwave generator and a hydraulic system that slowly moved the equipment forward. Dipose et al. (1984) estimated that it would take between 100-1000 hours per hectare to treat some types of weed. It is unavoidable to get away from these long times. The machine radiates microwaves down into the ground to heat everything and must literally boil the weed which requires much energy. A further drawback is that also the micro flora in the soil is knocked out.

As is apparent above it has not yet turned out to be practical to use electricity for weed control. It is quite simply too expensive and circumstantial in relation to chemical and mechanical control methods.

Despite the above problems the object of the invention is to provide a method for weed control based on the use of electricity. Surprisingly enough, in view of the known technique, weed control with electricity can namely in accordance with the invention be carried out with a very reasonable energy consumption with short high voltage pulses with low energy content but sufficiently high field strength of 100-300 kV/m for electropermeabilitation of cell membranes in growing weeds. The invention can be used for weed control within farming, horticulture gardening, forestry, parks or other suitable areas in particular connection with sowing. The invention only damage growing seeds and plants early in the life cycle and makes it impossible for these to germinate or live on. Dry seed for sowing is not influenced why the invention with advantage can be used in connection with sowing without influencing the germination of the seed. Nor is the micro flora in the soil influenced within the specified voltage span. Precisely when seeds start to grow they are namely very sensitive to electricity. When the seed has well grown into a plant however a considerable amount of electrical energy is necessary to harm the plant so much that it does not continue to grow on. Also in order harm ungrown seeds with electric voltage pulses or electric current considerable amounts of electric energy is required, one must practically boil the seed.

The invention also concerns a device for selective weed control in accordance with claim 1 that includes applicators that are connected to a pulse generator that receives its energy from an energy transformer that transforms electric or mechanical energy, the applicators are arranged in pairs and are of an electrically conductive material, the applicators are so arranged that they may be brought in contact with the soil that is to be treated against germinating weed.

In accordance with the invention the applicators are provided with a device that registers the movement of the applicators in relation to the soil, the applicators are provided with a device that can register the conductivity of the soil, the applicators are arranged so that the relative distance is permanent, the pulse generator is built with a device for the generation of pulses with a certain length and shape, the pulse generator is provided with a monitoring means that monitor the energy transfer to amplitude, pulse length and frequency, and the device is provided with a sensor for protection of personnel via a control means.

By treating ground that is to be sown in accordance with the invention with electric pulses with low energy weed that has just started to germinate can be stopped in its development. By undertaking this controlling simultaneously with sowing the intended crop is given an improved chance of having time to grow before the weed. At sowing the problem is namely that the seeds of the weed is already in the ground and have already started to germinate when the intended crop is sown and can therefor get ahead of this. According to known technique one is therefor then obliged to fight the weed in order to let the intended crop come to its right. By in accordance with the invention inserting the use of electricity precisely in connection with planting and preferably simultaneously with the sowing, that is by means of an addition to the sowing machine one can eliminate precisely the germinating weed seeds. Weed seeds growing later have less chances of asserting themself since they then have competition of the intended crop. Since sowing furthermore normally has been preceded by mechanical working of the ground herewith earlier weeds have already been eliminated and it is therefor actually sufficient if presently sprouting weed is controlled. By in accordance with the invention feed short high voltage pulses to the ground the sprouting weed can be controlled. The high voltage pulses with short duration will not give any great damages in the weed sprouts as such. However the amount of energy is sufficient to achieve an electropermeabilizing of the cell membranes of the sprouting weed seeds. This in turn leads to a stopped growth for the damaged sprouts. Since the seeds for the intended ground crop has not started to germinate at sowing these are not influenced and sowing and weed control can be executed with the same machine without any inconvenience, on the contrary it is particularly practical to execute weed control and sowing precisely simultaneously so that the intended crop gets the competing weed sprouts eliminated at the optimally correct time. The amount of energy that is required for the control described here is insignificant and is apparent from the following formula 1.

*Formula 1*

$$\textit{Mean power = (conductivity in the ground)} \times \textit{(the field strength)}^2 \times \textit{(degree of modulation)}$$

$$\textit{/ (Density) (W/kg)}$$

*Conductivity = 0.2 siemens*
*Field strength = 300 000 volt/m*
*degree of modulation = 1/10 000*
*density 1500 kg/m$^3$*
The momentary power in the pulse is very high, for instance 12 MW/kg but since the pulse is of very short duration (typically 100 microseconds long) and is applied once a second the mean power is considerably lower that is 12 kW/kg. In reality a capacitor battery is charged that is discharged very quickly and deliver the desired high voltage pulse. Alternatively alternating voltage is used that can be transformed to high voltage.

The treatment of plant cells with these high voltage pulses influence primarily protoplasm dependent on the barrier that is constituted by the cell wall. With rectangular pulses the optimal amplitude of the field strength is between 100-300 kV/m with a duration of (10-100 micro seconds). With exponentially declining pulses the field strength is weaker (25-75 kV/m) and the duration of the pulse longer (1000 - 20 000 microseconds).

There are examples of experiments with intact plant cells of for instance rice that shows that the cell wall is not an absolute obstacle to electroporation (Morikawa et al 1986; Dekeyser et al.,1990). The invention is based on one using an electric field strength so high that the cell membranes are destroyed or punctured and the cell dies as a result of this, but not much higher field strength. The earth bed is treated with pulses of short duration (0,1 - 1 milliseconds) with the field strength 150 - 300 kV/m (1500 3000 V/cm). These high field intensities has a selective destructive effect on germinating weed seeds while dry seed for sowing is not influenced. For influence on the bacterial flora in the ground higher field strengths and longer pulses are necessary. However larger animals as maggots of noxious insects may be influenced.

The new technique has been evaluated with white mustard (Sinapsis alba, var. Emergo) simulating weed with high germination (87%). The white mustard was cultivated in fertilized peat earth (70% earth, 30% Perlite) in plastic containers (5 x 11 x 16 cm) that were placed on a watering carpet in order to secure an even earth humidity. The plants were cultivated in a climate chamber with a mean climate corresponding to 15th May in Skåne. The evaluation was executed in three main groups, I. dry seeds, II. germinated seeds and III seeds moistened in nutrition solution. At all tests pulses with a pulse length of 80 μS have been applied. At all tests check groups have been used where the treatment has been as like that of the treated groups as possible.

The dry seeds (group I) were placed in trays with nutrient solution, and pulses with a field strength of 500 - 7500 V/cm was applied. Groups of ca 5 seeds were treated and were then placed on moist growing substrate in petri bowls. The seeds germinated normally, that is the treatment had no effect.

The treatment of germinating seed was tested (group II) in cultivating trays, 15 x 25 cm, with ca three cm thick layer of soil. Groups of 6 seeds were sown and treated with 1000, 1500, 2000, 2500 and 3000 V/cm. One seed in every tray constituted check. The seeds were treated 2, 4, 6 and 8 days respectively after sowing, in each group totally 8 cultivating trays were included, where one tray was check. The result was evaluated by determination of the number of not germinated seeds, visual reading and by weighing of the plants. Our evaluation showed that a treatment with field strengths above 2000 V/cm had a strong effect on seeds that were treated 2 and 4 days after sowing. If the plant was left 6 or 8 days a clear retardation could be observed but the plant lived on.

In order to establish if the moisture content of the seed was of decisive importance for the result, seeds were placed in nutrition solution for different long times (group III). All were treated with 3000 V/cm. The tests showed that all seeds that hade been in a nutrition solution for at least 35 minutes lost their fertility entirely.

The method has no effect on dry seeds and also plants that have reached a certain size can take the treatment without serious damages. The method may be very useful particularly in connection with sowing were the useful crop is not damaged but weed that is in an early stage is totally knocked out. Already established weed can be handled with mechanical methods.

An embodiment of a device in accordance with the invention placed on a sowing machine pulled by a tractor is shown i fig 1. Fig. 2 shows the sowing machine with the built on invention in more detail. Fig. 3 shows a sowing share with applicators that take down voltage pulses into the soil. In fig 4 there is an example of how the pulse generator can be constructed.

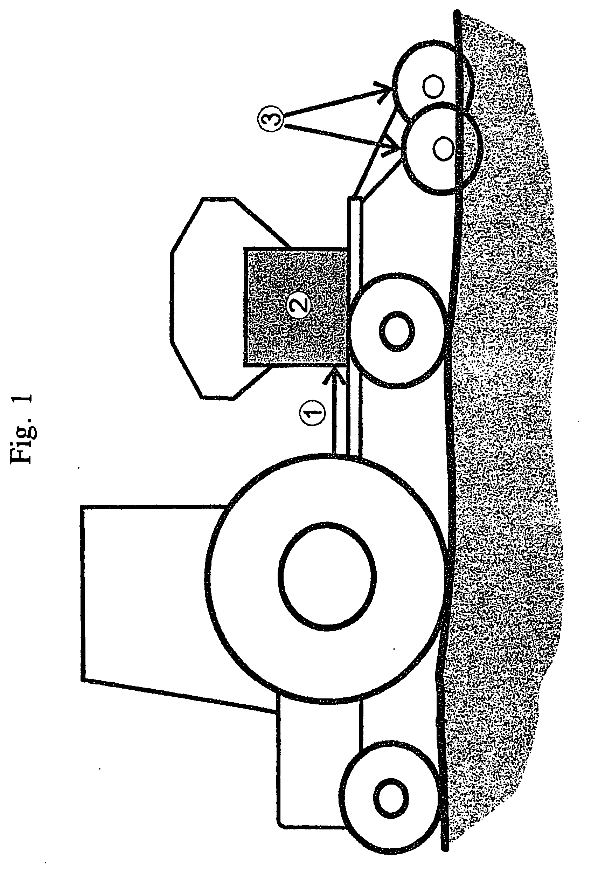

In accordance with fig 1 a transformer (2) is placed on a sowing machine, that is drawn by for instance a tractor. This transformer converts electrical or mechanical energy to high voltage pulses. The energy is for instance taken from the pulling tractor via a transmission (1) or from a local power source. The high voltage pulses are applied via applicators (3) placed on the sowing share down to the soil around the just sown seed.

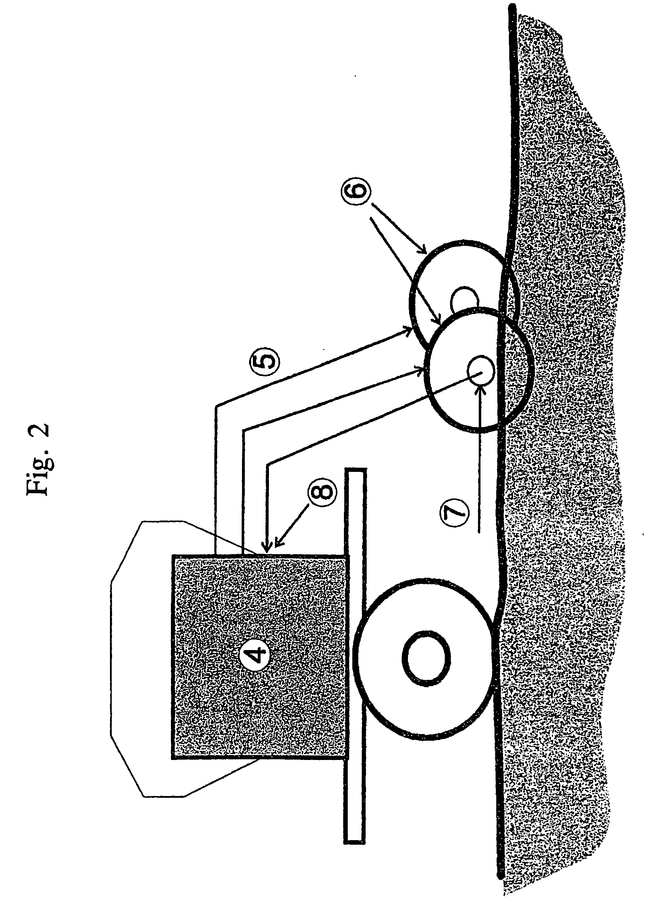

In accordance with fig 2 the transformer (4) is coupled via a number, at least 2, high tension wires (5) to electrically conducting applicators (6), that have a given relative distance and are in contact with the soil down to a depth of 4 - 15 centimeters, typically 5 centimeters. A sensor system (7) placed on the applicators provides the transformer with information of the conductivity of the soil and the speed with which these move through the soil. The signals are fed back to a signal transformer (8) placed in the generator system and are used to synchronize the pulse generator so that each part of the soil is treated with 5 - 25 pulses, typically 10. The pulses are to have a short duration, typically 0,01 - 1 millisecond and a field strength of 150 - 300 kV/m. At a distance between the applicators of 5 centimeters the voltage is typically to be 7500- 15000V.

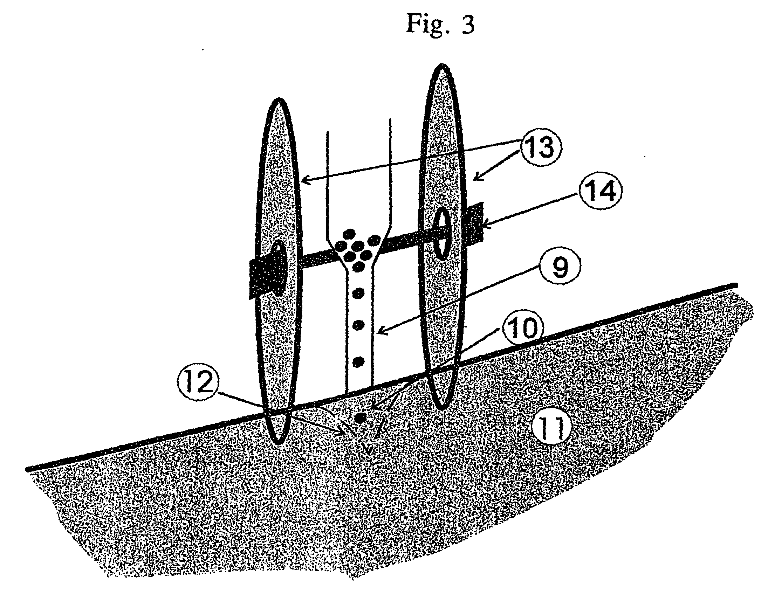

Fig 3 shows the sowing share in more detail, the seed pass through a channel (9). The sown seed (10) gets into a grove (12) in the soil (11) between a pair of applicators (13). The applicators may be several to the number shaped as plates, rods or discs that are rigid or can rotate but these always have a constant relative distance. On the applicators or in connection witn these there are sensors (14) that register movement through the soil and the conductivity of the soil.

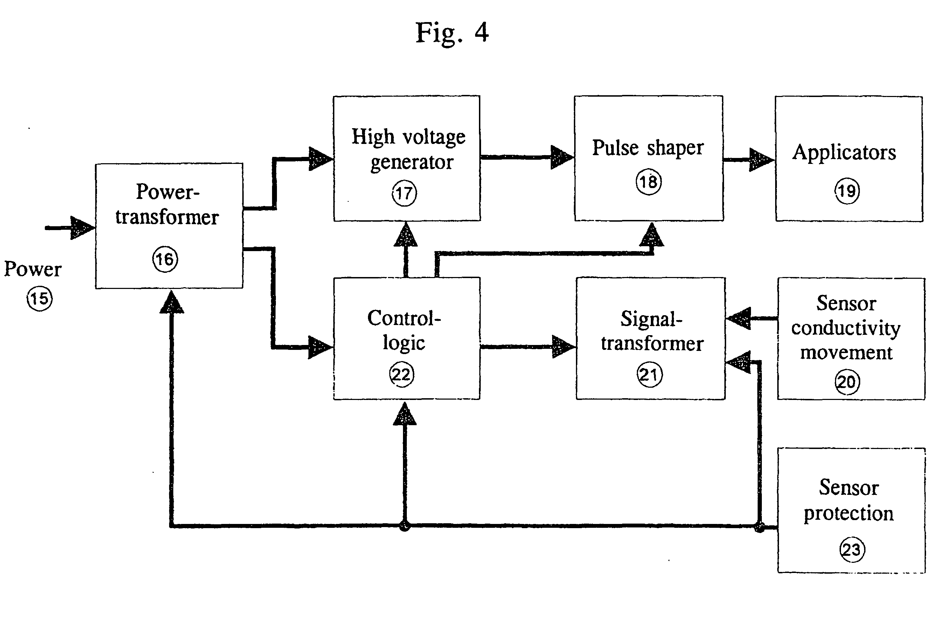

In fig 4 is shown a block diagram of the pulse generator. The energy or power transformer (15) gets energy from the puller or an integrated power source. The energy is transformed for instance by means of a transformer and rectifier (16) to a suitable level for instance 24 V DC. This rectified voltage provides current to a high voltage generator (17) for instance built as an oscillator and transformer. The high voltage may possibly be stored in a number of reservoir capacitors after rectifying. A pulse shaper (18) generates short pulses by opening and closing a valve element (tyristor, transistor or the like) with very short duration. The valve element can work directly with the high voltage or with a lower voltage that is transformed up in a last pulse transformer before it is applied in the soil with the applicators (19). The sensors (20) placed on the sowing share are coupled to signal transformers (21) giving suitable signals to a control logic (22) that controls the high voltage generator by controlling amplitude, frequency and/or pulse length. The control logic is also connected to the pulse shaper and controls the duration of the pulses and frequency and possibly pulse shape. Protections (23) may be used to protect users against electric casualties. If the user comes within the operating area of the device power trandnission, control logic and/or pulse shaper can be disconnected to prevent delivery of pulses.

In a further development of the inventive thought the control of weed may be further effectivised by the adding of some suitable substance that is effective in the cell, for instance calcium ions, in connection with the electrical weed control. The added substance may namely penetrate through the perforated cell membranes and work inside the cell restraining its growth or killing the cell. The amount of substance that has to be added is comparatively small and has in for instance the case of calcium ions no remaining poisonous effect what so ever for the crop, rather the opposite. At the same time the efficiency in the electrical control is increased and less amounts of electricity can be used. Tests indicate that the required applied field strengths can be reduced to approximately 1/3. If the calcium ions exist in sufficient amount in the ground of course no admixture has to be done. One can consider to add the substance in some form of solution, for instance $CaNo_3$, that is sprayed over the ground alternatively that the substance is added together with the crop that is to be sown. If the used substance is constituted by a conventional pesticide the concentration of this can be reduced radically through elektroperforation since efficient influence may take place in the cells of the plant. The adding may take place simultaneously with or just before the electroperforation so that the substance can pierce through the cell membranes of the weed germs and work inside the cell. The substance can be a mineral salt or an organic combination, as a pesticide in low concentration. A concentration of calcium ions in the area 10 - 100 millimoles may be suitable . In order to achieve an exchange that is as good as possible from the used electric energy the electric pulses should have an exponentially rising front flank and an exponentially falling rear flank. The duration may be between 10 and 10 000 microseconds.

Even if above in particular has been pointed out the suitable in the use of the invented method precisely at sowing one may of course also use it before sowing, and even in connection with preceding mechanical preparation of the ground, that is without further use of time.

The invented method may also be used after sowing provided that it is adapted so that the intended crop is not damaged. For instance one can wait until this has grown sufficiently not to be harmed, alternatively one can at spaciously planted crops arrange applicators in pairs between rows of crop and feed these electrically so that the crop is not subjected to any pulses (the crop is surrounded by applicators with the same voltage).

**Claims**

1. Method for electrical weed control, **characterized in that** electrical high voltage pulses are led through the ground, alternatively are induced in this, with an electric field strength being 100 - 300 kV/m, corresponding to what is required to establish electropermeabilizing of growing cellmembranes of weed seeds.

2. Method according to claim 1, **characterized in that** every pulse has a duration between 10 - 10 000 microseconds ($10^{-6}$ sec).

3. Method according to claim 1 or 2, **characterized in that** the ground that is to be treated in each section is subjected to a number of pulses, for instance 5 to 30 pulses, in particular 10 pulses.

4. Method according to any of the preceding claims, **characterized in** the pulses having an exponentially rising front pulse flank and an exponentially falling rear pulse flank.

5. Method according to any of the preceding claims, **characterized in** the feeding of calcium ions to the ground in connection with the electrical treatment so that calcium ions or some other for the cell poisonous substance (other mineral salt, organic combination as for instance a pesticide in low concentration) through the electroperforation that takes place of the cell membranes of the weed germs can penetrate into and kill the cell, in the case of calcium ions a concentration in the area 10 - 100 millimoles may be used.

6. Method according to any of the preceding claims, **characterized in** being executed simultaneously with sowing of intended crop.

7. Device for selective weed control in accordance with claim 1 that includes applicators (3) that are connected to a pulse generator (2) that receives its energy from an energy transformer (1) that transforms electric or mechanical energy, that the applicators are arranged in pairs and are of an electrically conductive material (13), that the applicators are so arranged that they may be brought in contact with the soil that is to be treated against germinating weed, **characterized in that** the applicators are provided with a device (14) that registers the movement of the applicators in relation to the soil, that the applicators are provided with a device (14) that can register the conductivity of the soil, that the applicators are arranged so that the relative distance is permanent, that the pulse generator is built with a device (18) for the generation of pulses with a certain length and shape, that the pulse generator is provided with a monitoring means (22) that monitor the energy transfer to amplitude, pulse length and frequency, that the device is provided with a sensor (23) for protection of personnel via a control means (22).

8. Device according to claim 7, **characterized in,** the mentioned applicators being shaped as two or several permanent plates.

9. Device according to claim 7, **characterized in,** the mentioned applicators being shaped as two or several rotating wheels.

10. Device according to any of the claims 7 to 9, **characterized in,** the mentioned applicators being brought down in the soil to a certain depth, typically 5 cm or corresponding to the sowing depth.

11. Device according to any of the claims 7 to 10, **characterized in,** the mentioned applicators transferring the electric energy through direct contact to soil at the depth were the weed seeds are.

12. Device according to any of the preceding claims 7 to 11, **characterized in,** the mentioned applicators contact free transferring the electrical energy to the soil in which the treated weed exist via capacitive or inductive coupling.

13. Device according to any of the preceding claims 7 to 12, **characterized in**, the pulse shaper delivering pulses with a duration of 0,01 - 10 mS or typically 0,05 mS.

14. Device according to any of the preceding claims 7 to 13, **characterized in**, the pulse shaper delivering pulses in the shape of pulsating rectified voltage.

15. Device according to any of the preceding claims 7 to 14, **characterized in,** the pulse shaper delivering pulses in the form of pulsating alternating voltage.

16. Device according to any of the preceding claims 7 to 15, **characterized in,** the pulse shaper delivering pulses with sufficiently high amplitude to induce an electric field strength in the soil sufficient enough to destroy the germination of weed seeds normally in the area 75 - 500 kV/m typically ca 250 kV/m.

17. Device according to any of the preceding claims 7 to 16, **characterized in, that** it is provided with a device that synchronizes the pulses with the movement of the applicator in such a way that each treated region is treated with 5 - 30 pulses or typically 10 pulses.

18. Device according to any of the preceding claims 7 to 17, **characterized in, that** it is provided with means for measuring the conductivity in the treated area.

19. Device according to any of the preceding claims 7 to 18, **characterized in, that** it is provided with means for measuring the movement of the applicator in the treated area.

20. Device according to any of the preceding claims 7 to 19, **characterized in, that** it is provided with means for controlling voltage amplitude and current.

21. Device according to any of the preceding claims 7 to 20, **characterized in, that** it is provided with means that based on registered conductivity and/or movement can optimize voltage amplitude, pulse duration and the number of pulses manually or via automation.

22. Device according to any of the preceding claims 7 to 21, **characterized in, that** it is provided with means that makes it impossible for live parts to be touched during use, built as cover sheets with built in contact breakers that protect the electrodes were the breakers are activated if the protections are moved, the voltage alternatively being broken with detectors that discover and identifies alien objects and breaks he voltage.

**Patentansprüche**

1. Verfahren zur elektrischen Unkrautbekämpfung, **dadurch gekennzeichnet, daß** elektrische Hochspannungsimpulse durch das Erdreich geleitet oder alternativ in diesem induziert werden, mit einer elektrischen Feldstärke von 100 bis 300 kV/m, und zwar in einer solchen Weise, daß man eine Elektrodurchdringung der wachsenden Zellmembranen der Unkrautsamen erzielt.

2. Verfahren nach Anspruch 1, **dadurch gekennzeichnet, daß** jeder Impuls eine Dauer zwischen 10 - 10.000 Mikrosekunden ($10^{-6}$ s) hat.

3. Verfahren nach Anspruch 1 oder 2, **dadurch gekennzeichnet, daß** das Erdreich, welches in jedem Abschnitt zu behandeln ist, einer Anzahl von Impulsen, beispielsweise 5 bis 30 Impulsen, insbesondere 10 Impulsen, ausgesetzt wird.

4. Verfahren nach einem der vorangehenden Ansprüche, **dadurch gekennzeichnet, daß** die Impulse eine exponentiell ansteigende vordere Impulsflanke und eine exponentiell abfallende hintere Impulsflanke haben.

5. Verfahren nach einem der vorangehenden Ansprüche, **dadurch gekennzeichnet, daß** Kalziumionen dem Erdreich in Verbindung mit der elektrischen Behandlung derart zugeführt werden, daß Kalziumionen oder andere Ionen für die Zellsubstanzvernichtung (ein anderes Mineralsalz, eine organische Kombination beispielsweise eines Pestizids mit geringer Konzentration) durch die Elektroperforation eingebracht werden, welche an den Zellmembranen der Unkrautkeimlinge auftritt, so daß diese Stoffe in die Zelle eindringen und diese töten können, wobei bei Kalziumionen eine Konzentration in einem Bereich von 10 - 100 Millimol eingesetzt werden kann.

**6.** Verfahren nach einem der vorangehenden Ansprüche, **dadurch gekennzeichnet, daß** es gleichzeitig mit dem Säen der beabsichtigten Ernte durchgeführt wird.

**7.** Vorrichtung zur selektiven Unkrautvernichtung nach Anspruch 1, welche Applikatoren (3) umfaßt, welche mit einem Impulsgenerator (2) verbunden sind, welcher Energie von einem Energietransformator (1) erhält, welcher elektrisch oder mechanisch Energie transformiert, und wobei die Applikatoren paarweise angeordnet sind und aus einem elektrisch leitenden Material (13) bestehen, und wobei die Applikatoren derart angeordnet sind, daß sie in Kontakt mit dem Erdreich gebracht werden können, welches zur Unkrautvernichtung zu behandeln ist, **dadurch gekennzeichnet, daß** die Applikatoren mit einer Einrichtung (14) versehen sind, welche die Bewegung der Applikatoren bezüglich des Erdreichs aufeinander abstimmt, daß die Applikatoren mit einer Einrichtung (14) versehen sind, welche eine Abstimmung auf die Leitfähigkeit des Erdreichs vornimmt, daß die Applikatoren derart angeordnet sind, daß der relative Abstand erhalten bleibt, daß der Impulsgenerator mit einer Einrichtung (18) zum Erzeugen von Impulsen mit einer gewissen Länge und Form versehen ist, daß der Impulsgenerator mit einer Überwachungseinrichtung (22) versehen ist, welche die Energieübertragung hinsichtlich der Amplitude, Impulslänge und Frequenz überwacht, und daß die Einrichtung mit einem Sensor (23) zum Schutz des Personals über eine Steuereinrichtung (22) versehen ist.

**8.** Vorrichtung nach Anspruch 7, **dadurch gekennzeichnet, daß** die Applikatoren in Form von zwei oder mehreren permanenten Platten ausgebildet sind.

**9.** Vorrichtung nach Anspruch 7, **dadurch gekennzeichnet, daß** die Applikatoren in Form von zwei oder mehreren rotierenden Rädern ausgebildet sind.

**10.** Vorrichtung nach einem der Ansprüche 7 bis 9, **dadurch gekennzeichnet, daß** die Applikatoren in das Erdreich bis auf eine gewisse Tiefe, typischerweise 5 cm oder entsprechend der Sähtiefe, eingebracht werden.

**11.** Vorrichtung nach einem der Ansprüche 7 bis 10, **dadurch gekennzeichnet, daß** die Applikatoren die elektrische Energie über einen direkten Kontakt mit dem Erdreich bis zu einer Tiefe übertragen wird, an der sich die Unkrautsamen befinden.

**12.** Vorrichtung nach einem der Ansprüche 7 bis 11, **dadurch gekennzeichnet, daß** die Applikatoren kontaklose elektrische Energie in das Erdreich übertragen, in welchem das zu behandelnde Unkraut vorhanden ist, und zwar mittels einer kapazitiven oder induktiven Kopplung.

**13.** Vorrichtung nach einem der vorangehenden Ansprüche 7 bis 12, **dadurch gekennzeichnet, daß** der Impulsformer Impulse mit einer Dauer von 0,01 - 10 ms oder 0,05 ms abgibt.

**14.** Vorrichtung nach einem der vorangehenden Ansprüche 7 bis 13, **dadurch gekennzeichnet, daß** der Impulsformer Impulse in Form einer pulsierenden, gleichgerichteten Spannung abgibt.

**15.** Vorrichtung nach einem der vorangehenden Ansprüche 7 bis 14, **dadurch gekennzeichnet, daß** der Impulsformer Impulse in Form von pulsierenden Wechselspannungen abgibt.

**16.** Vorrichtung nach einem der vorangehenden Ansprüche 7 bis 15, **dadurch gekennzeichnet, daß** der Impulsformer Impulse mit so ausreichend hoher Amplitude abgibt, daß in dem Erdreich eine elektrische Feldstärke induziert wird, welche so ausreichend hoch ist, daß das Wachstum der Unkrautsamen zerstört wird, wobei die elektrische Feldstärke normalerweise in einem Bereich von 75 - 500 kV/m, insbesondere ca. 250 kV/m liegt.

**17.** Vorrichtung nach einem der voranstehenden Ansprüche 7 bis 16, **dadurch gekennzeichnet, daß** eine Einrichtung vorgesehen ist, welche die Impulse mit der Bewegung des Applikators derart synchronisiert, daß jeder behandelte Bereich mit 5 - 30 Impulsen, oder typischerweise 10 Impulsen, behandelt wird.

**18.** Vorrichtung nach einem der vorangehenden Ansprüche 7 bis 17, **dadurch gekennzeichnet, daß** eine Einrichtung zum Messen der Leitfähigkeit im zu behandelnden Bereich vorgesehen ist.

**19.** Vorrichtung nach einem der vorangehenden Ansprüche 7 bis 18, **dadurch gekennzeichnet, daß** eine Einrichtung zum Messen der Bewegung des Applikators in dem behandelten Bereich vorgesehen ist.

**20.** Vorrichtung nach einem der vorangehenden Ansprüche 7 bis 19, **dadurch gekennzeichnet, daß** eine Einrichtung zum Steuern der Spannungsamplitude und des Stroms vorgesehen ist.

**21.** Vorrichtung nach einem der vorangehenden Ansprüche 7 bis 20, **dadurch gekennzeichnet, daß** eine Einrichtung vorgesehen ist, welche basierend auf der abgestimmten Leitfähigkeit und/oder der Bewegung die Spannungsamplitude, die Impulsdauer und die Anzahl der Impulse manuell oder automatisch optimieren kann.

**22.** Vorrichtung nach einem der vorangehenden Ansprüche 7 bis 21, **dadurch gekennzeichnet, daß** eine Einrichtung vorgesehen ist, welche verhindert, daß lebende Teile während des Gebrauchseinsatzes in Berührung kommen, welche in Form von Abdeckblechen ausgelegt sind, welche eingebaute Kontaktunterbrecher haben, welche die Elektroden schützen, um daß die Unterbrecher aktiviert werden, wenn sich die Schutzeinrichtungen bewegen, und daß die Spannung alternativ mit Detektoren unterbrochen wird, welche andere Objekte feststellen und identifizieren und die Spannung unterbrechen.

**Revendications**

**1.** Procédé pour le désherbage électrique, **caractérisé en ce que** des impulsions de courant électrique de tension élevée sont conduites à travers le sol, ou en variante sont induites dans celui-ci, avec une intensité de champ électrique de 100 à 300 kV/m, qui correspond à ce qui est nécessaire pour établir une perméabilité à l'électricité des membranes de cellules de graines de mauvaises herbes.

**2.** Procédé selon la revendication 1, **caractérisé en ce que** chaque impulsion a une durée comprise entre 10 et 10.000 microsecondes ($10^{-6}$ s).

**3.** Procédé selon la revendication 1 ou 2, **caractérisé en ce que** le sol qui doit être traité dans chaque parcelle est soumis à un certain nombre d'impulsions, par exemple 5 à 30 impulsions, en particulier 10 impulsions.

**4.** Procédé selon l'une quelconque des revendications précédentes, **caractérisé en ce que** les impulsions ont un flanc d'impulsion avant qui croît exponentiellement et un flanc d'impulsion arrière qui décroît exponentiellement.

**5.** Procédé selon l'une quelconque des revendications précédentes, **caractérisé par** l'apport d'ions calcium dans le sol en relation avec le traitement électrique, de façon telle que les ions calcium, ou une autre substance qui empoisonne les cellules (d'autres sels minéraux, d'autres combinaisons organiques, comme, par exemple, un pesticide sous faible concentration), grâce à l'électroperforation, qui se produit, des membranes de cellule des germes de mauvaises herbes, peuvent pénétrer dans la cellule et la tuer, une concentration de l'ordre de 10 à 100 millimoles pouvant être utilisée dans le cas des ions calcium.

**6.** Procédé selon l'une quelconque des revendications précédentes, **caractérisé en ce qu'**il est exécuté en même temps que l'on sème la future récolte.

**7.** Dispositif de maîtrise sélective des mauvaises herbes au moyen d'électricité selon la revendication 1, comprenant des dispositifs d'application (3) qui sont reliés à un générateur (2) d'impulsions qui reçoit de l'énergie provenant d'un transformateur d'énergie (1) qui transforme de l'énergie électrique ou mécanique, les dispositifs d'application étant disposés par paires et étant constitués d'un matériau électriquement conducteur (13), et étant agencés de façon telle qu'ils peuvent être amenés en contact avec le sol qui doit être traité à l'encontre de la germination des mauvaises herbes, **caractérisé en ce que** les dispositifs d'application sont équipés d'un dispositif (14) qui enregistre les déplacements des dispositifs d'application par rapport au sol, **en ce que** les dispositifs d'application sont équipés d'un dispositif (14) qui est apte à enregistrer la conductivité du sol, **en ce que** les dispositifs d'application sont disposés de façon telle que la distance relative est constante, **en ce que** le générateur d'impulsions est construit sous forme d'un dispositif (18) destiné à générer des impulsions d'une certaine longueur et d'une certaine forme, **en ce que** le générateur d'impulsions est équipé d'un moyen d'affichage (22) qui affiche le transfert d'énergie, ce qui concerne l'amplitude, la durée d'impulsion et la fréquence d'impulsion, **en ce que** le dispositif est muni d'un capteur (23) destiné à la protection du personnel par l'intermédiaire d'un moyen de commande (22).

8. Dispositif selon la revendication 7, **caractérisé en ce que** les dispositifs d'application mentionnés se présentent sous forme de deux ou de plusieurs plaques permanentes.

9. Dispositif selon la revendication 7, **caractérisé en ce que** les dispositifs d'application mentionnés se présentent sous forme de deux ou de plusieurs roues tournantes.

10. Dispositif selon l'une quelconque des revendications 7 à 9, **caractérisé en ce que** les dispositifs d'application mentionnés sont introduits dans le sol jusqu'à une certaine profondeur, typiquement de 5 cm, ou correspondant à la profondeur à laquelle on sème.

11. Dispositif selon l'une quelconque des revendications 7 à 10, **caractérisé en ce que** les dispositifs d'application mentionnés transfèrent de l'énergie électrique par contact direct avec le sol à la profondeur où se situent les mauvaises herbes.

12. Dispositif selon l'une quelconque des revendications précédentes 7 à 11, **caractérisé en ce que** les dispositifs d'application mentionnés effectuent un contact de transfert libre de l'énergie électrique avec le sol dans lequel se trouvent les mauvaises herbes traitées par l'intermédiaire d'un couplage capacitif ou inductif.

13. Dispositif selon l'une quelconque des revendications précédentes 7 à 12, **caractérisé en ce que** le dispositif de mise en forme des impulsions délivre des impulsions d'une durée de 0,01 à 10 ms, ou typiquement de 0,05 ms.

14. Dispositif selon l'une quelconque des revendications précédentes 7 à 13, **caractérisé en ce que** le dispositif de mise en forme des impulsions délivre des impulsions se présentant sous forme de tension continue pulsée.

15. Dispositif selon l'une quelconque des revendications précédentes 7 à 14, **caractérisé en ce que** le dispositif de mise en forme des impulsions délivre des impulsions se présentant sous forme de tension alternative pulsée.

16. Dispositif selon l'une quelconque des revendications précédentes 7 à 15, **caractérisé en ce que** le dispositif de mise en forme des impulsions délivre des impulsions d'une amplitude suffisamment importante pour induire dans le sol une intensité de champ électrique suffisante pour détruire la germination des graines de mauvaises herbes, se situant normalement dans la plage de 75 à 500 kV/m, typiquement d'environ 250 kV/m.

17. Dispositif selon l'une quelconque des revendications précédentes 7 à 16, **caractérisé en ce qu'**il est muni d'un dispositif qui synchronise les impulsions avec le déplacement du dispositif d'application, de façon telle que chaque zone traitée le soit au moyen de 5 à 30 impulsions, ou typiquement de 10 impulsions.

18. Dispositif selon l'une quelconque des revendications précédentes 7 à 17, **caractérisé en ce qu'**il est équipé de moyens de mesure de la conductivité de la zone traitée.

19. Dispositif selon l'une quelconque des revendications précédentes 7 à 18, **caractérisé en ce qu'**il est équipé de moyens de mesure du déplacement du dispositif d'application dans la zone traitée.

20. Dispositif selon l'une quelconque des revendications précédentes 7 à 19, **caractérisé en ce qu'**il est équipé de moyens de commande de l'amplitude de la tension et de l'intensité.

21. Dispositif selon l'une quelconque des revendications précédentes 7 à 20, **caractérisé en ce qu'**il est équipé de moyens qui, en fonction de la conductivité et/ou du déplacement enregistrés sont aptes à optimiser manuellement ou automatiquement l'amplitude de la tension, la durée des impulsions et le nombre des impulsions.

22. Dispositif selon l'une quelconque des revendications précédentes 7 à 21, **caractérisé en ce qu'**il est équipé de moyens qui rendent impossible que des parties sous tension soient touchées en cours d'utilisation, lesquels moyens sont réalisés sous forme de capots munis de coupe-circuit qui protègent les électrodes lorsque les coupe-circuit sont activés si les protections sont enlevées, la tension étant coupée au moyen de détecteurs qui découvrent et identifient des objets étrangers et coupent la tension.

Fig. 1

EP 0 928 134 B1

Fig. 2

Fig. 3

EP 0 928 134 B1

# Fig. 4

EP 0 928 134 B1